# EUROPÄISCHE PATENTSCHRIFT

(11) **EP 3 492 312 B1**
(45) Veröffentlichungstag und Bekanntmachung des Hinweises auf die Patenterteilung: **28.10.2020**
(21) Anmeldenummer: 17205228.4
(22) Anmeldetag: 04.12.2017
(51) Int. Cl.: B60N 2/06, F16H 57/00

(54) **LÄNGSVERSTELLEINHEIT EINES SITZES, INSBESONDERE EINES SITZES IN EINEM KRAFTFAHRZEUG**
LONGITUDINAL ADJUSTMENT UNIT OF A SEAT, PARTICULARLY OF A SEAT IN A MOTOR VEHICLE
UNITÉ DE RÉGLAGE LONGITUDINAL D'UN SIÈGE, EN PARTICULIER D'UN SIÈGE DANS UN VÉHICULE AUTOMOBILE

(43) Veröffentlichungstag der Anmeldung: 05.06.2019
(73) Patentinhaber: IMS Gear SE & Co. KGaA, 78166 Donaueschingen (DE)
(72) Erfinder: Geiges, Christian, 78176 Blumberg (DE); Fuchs, Gabriel, 78479 Reichenau (DE)
(74) Vertreter: Westphal, Mussgnug & Partner Patentanwälte mbB

(56) Entgegenhaltungen:
- DE-A1-102006 009 576
- DE-A1-102009 003 280
- DE-A1-102016 203 639
- DE-B3-102006 022 947
- JP-A- H09 207 632

## Beschreibung

Die Erfindung betrifft eine Längsverstelleinheit eines Sitzes, insbesondere eines Sitzes in Kraftfahrzeugen, gemäß den Merkmalen des Oberbegriffs des Anspruchs 1.

Derartige Längsverstelleinheiten sind aus dem Stand der Technik hinlänglich bekannt und dienen der Verstellung der Position eines Sitzes in einem Fahrzeug. Längsverstelleinheiten wirken typischerweise mit einer an einem Chassis festgelegten Unterschiene und einer innerhalb dieser angeordneten Oberschiene zusammen, wobei die Oberschiene durch die Längsverstelleinheit motorisch verfahrbar ist. Das Verstellen der Oberschiene durch die Längsverstelleinheit erfolgt mittels einer Spindel, welche innerhalb der Oberschiene angeordnet ist und an ihrem jeweiligen ersten Ende und zweiten Ende abgestützt ist.

Aus dem Stand der Technik sind zwei unterschiedliche Antriebskonzepte bekannt, nämlich einerseits Längsverstelleinheiten mit einer feststehenden Spindel und andererseits Längsverstelleinheiten mit einer drehenden Spindel. Bei einer feststehenden Spindel erfolgt die Verstellung der Oberschiene zu der Unterschiede durch ein mit der Oberschiene feststehend gekoppeltes Getriebe. Bei einer drehenden Spindel treibt das Getriebe die Spindel rotatorisch an und eine Spindelmutter, welche fest mit der Oberschiene gekoppelt ist, wandelt die Drehbewegung der Spindel in eine laterale Bewegung entlang der Längsachse um.

Beispiele für Längsverstelleinheiten sind beispielsweise in DE 36 40 197 A1, DE 42 08 948 C2, DE 196 42 655 C2, DE 198 15 283 A1, DE 10 2004 013 009 A1 und DE 10 2006 052 936 A1 beschrieben worden. DE 10 2009 003280 A1, DE 10 2006 009 576 A1, DE 10 2016 203 639 A1, JP H09 207 632 A und DE 10 2006 022 947 B3 stellen weiteren Stand der Technik dar.

Nachteilig an diesem Stand der Technik ist, dass in Abhängigkeit von dem gewünschten Antriebskonzept, also mit einer drehender Spindel oder mit einer stehender Spindel unterschiedliche Längsverstelleinheiten verwendet werden. Aufgrund der hohen Anforderungen an eine Längsverstelleinheit, welche neben der Verstellungsfunktion auch eine Unfallsicherheit gewährleisten muss, weisen derartige Längsverstelleinheiten unterschiedliche Bauformen auf, so dass unterschiedliche Fertigungsmethoden und Verfahren verwendet werden müssen.

Der Erfindung liegt daher die Aufgabe zugrunde, eine besonders kompakte Längsverstelleinheit anzugeben, welche unabhängig von dem gewählten Antriebskonzept sowohl für Längsverstelleinheiten mit einer drehenden Spindel als auch für Längsverstelleinheiten mit einer feststehenden Spindel verwendet werden kann. Die erfindungsgemäße Längsverstelleinheit für Sitze, insbesondere in Kraftfahrzeugen, soll aus einer minimalen Anzahl von einfach ausgebildeten, möglichst standardisierten Bauteilen herstellbar sein, so dass die verwendeten Bauteile kostengünstig hergestellt werden können, und keine kostenintensive Nachbearbeitung bedürfen. Auch soll der logistische Aufwand und die Lagerkosten durch eine mehrfache Verwendung der Bauteile reduziert werden.

Diese Aufgabe wird durch eine Längsverstelleinheit mit den Merkmalen des Anspruchs 1 gelöst.

Weiterbildungen der Erfindung sind Gegenstand der Unteransprüche.

Die erfindungsgemäße Längsverstelleinheit eines Sitzes, insbesondere eines Sitzes in einem Kraftfahrzeug, umfasst ein Gehäuse mit einer Durchgangsöffnung, die entlang einer Längsachse angeordnet ist und eine erste Spindelöffnung und eine zweite Spindelöffnung aufweist. Ferner umfasst die erfindungsgemäße Längsverstelleinheit eine Spindel mit Spindelaußengewinde, die durch die Durchgangsöffnung des Gehäuses durchführbar ist, eine Spindelmutter mit Spindelinnengewinde und eine Schnecke. Die Schnecke ist mittels eines beidseitigen Lagerbunds in dem Gehäuse gelagert und treibt die Spindelmutter an. Weiterhin ist die Spindelmutter in dem Gehäuse in der Längsachse beidseitig drehbar und axial gelagert, wobei ein Verbindungsmittel vorgesehen ist, durch welches die Spindel mit der Spindelmutter drehfest verbunden werden kann. Das Verbindungsmittel ist eine Spindelkontermutter, die nach Art einer Konterschraube mit der Spindelmutter verspannt werden kann.

Die Spindelkontermutter kann ohne weiteres auf die Spindel aufgesetzt und anschließend in die dafür vorgesehene Position gedreht werden, so dass sich die Montage besonders einfach und kostengünstig gestaltet.

Es ist vorteilhaft, wenn die Spindelkontermutter auf der der Spindelmutter zugewandten Seite eine Hülse aufweist, die durch die erste Spindelöffnung und/oder die zweite Spindelöffnung in das Gehäuse einführbar ist. Der Außendurchmesser der Hülse ist kleiner bemessen als der Innendurchmesser der jeweiligen Spindelöffnung des Gehäuses.

Auf der der Spindelmutter zugewandten Seite der Spindelkontermutter kann weiter bevorzugt eine Kontaktfläche angeordnet sein, welche eine vergrößerte Oberflächenrauheit aufweist. Die Kontaktfläche kann beispielsweise eine Aufrauhung, Riffelung oder dergleichen aufweisen.

Gemäß einer weiteren erfindungsgemäßen Ausgestaltung der vorliegenden Erfindung ist es vorteilhaft, wenn die Spindelmutter an dem Gehäuse durch mindestens eine Gleitlagerbuchse gelagert ist. Die Spindelmutter weist dafür im Bereich einer ersten Stirnseite und einer zweiten Stirnseite einen Lagerbund auf, der mittels der Gleitbuchse am Gehäuse abgestützt ist. Die Gleitbuchse kann aus einem metallischen Werkstoff oder aus einem gleitmodifizierten Kunststoff oder aus einem herkömmlichen Kunststoff hergestellt sein.

Weiterhin kann die Spindelmutter mindestens auf einer der beiden Stirnseiten eine hülsenförmige Verlängerung aufweisen, die durch eine der Spindelöffnungen aus dem Gehäuse herausragt.

Somit ist die Spindelmutter von außerhalb des Gehäuses zugänglich, und auf besonders einfache Art und Weise kann eine drehfeste Verbindung zwischen der Spindelmutter und der Spindel hergestellt werden.

Die Spindelmutter kann auf wenigstens einer der Stirnseiten eine Kontaktfläche aufweisen, die eine vergrößerte Oberflächenrauheit aufweist. Die Kontaktfläche ist vorzugsweise nach Art einer Zahnscheibe mit einer Riffelung versehen. Besonders bevorzugt ist die Kontaktfläche ausschließlich auf der dem Verbindungsmittel bzw. der Spindelkontermutter zugewandten Seite angeordnet.

Gemäß einer weiteren vorteilhaften Ausgestaltung der vorliegenden Erfindung ist es besonders vorteilhaft, wenn die Spindelkontermutter eine Außenkontur zur Drehmomentübertragung, vorzugsweise einen Außensechskant, aufweist, wodurch die Spindelkontermutter besonders montagefreundlich anbringbar ist. Die Außenkontur der Spindelkontermutter ist beliebig variierbar, sollte jedoch eine Montage, insbesondere eine werkzeuggestützte Montage, erleichtern.

Es ist weiterhin vorteilhaft, wenn die Schnecke mit einem Antriebsmotor koppelbar ist. Der Antriebsmotor ist somit mittels der Schnecke und der Gewindemutter mit der Spindel derart gekoppelt, dass bei einer Zustellung des Antriebsmotors die Spindel in eine Drehbewegung um die Längsachse versetzt ist.

Darüber hinaus ist es vorteilhaft, wenn das Gehäuse aus einem ersten Gehäuseteil und einem zweiten Gehäuseteil gebildet ist. Durch die zweiteilige Ausbildung des Gehäuses, ist die Längsverstelleinheit besonders einfach zu montieren.

Insbesondere ist es vorteilhaft, wenn das erste Gehäuseteil und das zweite Gehäuseteil zu gleichen Anteilen jeweils die erste Spindelöffnung und die zweite Spindelöffnung bilden. Demnach liegt die Trennebene zwischen dem ersten Gehäuseteil und dem zweiten Gehäuseteil auf der Längsachse, wobei weiterhin besonders bevorzugt die Trendebene zwischen dem ersten Gehäuseteil und dem zweiten Gehäuseteil orthogonal zu einer Achse der Schnecke verläuft. Einerseits ergibt sich daraus eine besonders einfache und unkomplizierte Montage und andererseits weist das zweiteilige Gehäuse eine gute Lastverteilung bei Aufnahme von Axialkräften von der Spindelmutter auf, insbesondere bei einem starken Bremsmanöver oder in einer Unfallsituation.

Weiterhin ist es besonders vorteilhaft, wenn das Gehäuse bzw. die beiden Gehäuseteile in einem U-förmigen Haltebügel sitzen, wodurch sich das Gehäuse besonders einfach und unfallsicher mit einem Chassis oder dergleichen verbinden lässt. Der Haltebügel ist dabei besonders bevorzugt U-förmig aus einem gebogenen Metallwerkstoff hergestellt und umgreift das Gehäuse in der Längsachse, sodass Axialkräfte aus der Spindel besonders gut aufgenommen werden können.

Es hat sich dabei als besonders vorteilhaft erwiesen, wenn zwischen dem U-förmigen Haltebügel und dem Gehäuse mindestens ein Dämpfer angeordnet ist. Durch den Dämpfer ist die Längsverstelleinheit bzw. das Gehäuse mit dem Getriebe und dem Antriebsmotor von dem Chassis schwingungsmechanisch entkoppelt. Eine Übertragung störender Geräusche zwischen der Längsverstelleinheit und dem Chassis ist somit verhindert, wodurch das Raumklima in einem Kraftfahrzeug, welches eine erfindungsgemäße Längsverstelleinheit aufweist, gesteigert ist.

Gemäß einer weiteren vorteilhaften Ausgestaltung der vorliegenden Erfindung wird das Gehäuse bzw. werden das erste Gehäuseteil und das zweite Gehäuseteil aus einem Metallwerkstoff hergestellt.

Darüber hinaus hat sich als besonders vorteilhaft erwiesen, wenn das erste Gehäuseteil und das zweite Gehäuseteil durch einen Klemm-, Schnapp-, Klebe-, Schweiß- und/oder Schraubverbindung miteinander verbunden sind.

Nachfolgend wird unter Bezugnahme auf die beiliegenden Figuren ein erfindungsgemäßes Ausführungsbeispiel der vorliegenden Erfindung erläutert. Es zeigen:
- Figur 1: Längsverstelleinheit mit einer feststehenden Spindel und einem in einem Gehäuse angeordneten und motorisch antreibbaren Getriebe, durch welches die Längsverstelleinheit entlang der feststehenden Spindel bewegbar ist,
- Figur 2: eine erfindungsgemäße Längsverstelleinheit mit einer drehbar gelagerten Spindel, die durch das Getriebe der Längsverstelleinheit angetrieben ist,
- Figur 3: eine schematische und vergrößerte Explosionsdarstellung der Längsverstelleinheit gemäß Figur 2, und
- Figur 4: eine Schnittansicht der Längsverstelleinheit gemäß den Figuren 2 und 3.

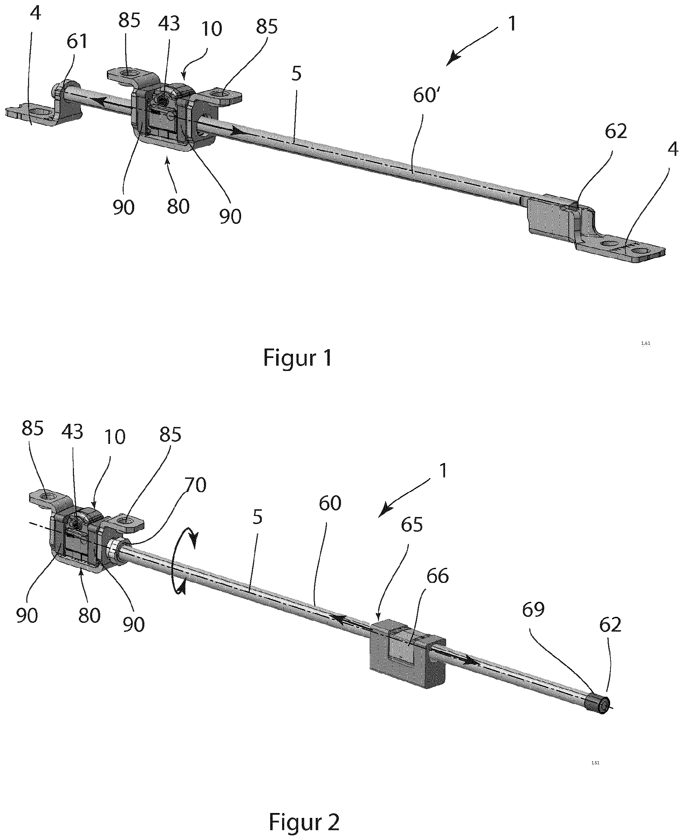

Nachfolgend wird unter Bezugnahme auf die Figuren 1 bis 4 eine Längsverstelleinheit 1 gemäß einem bevorzugten Ausführungsbeispiel der Erfindung im Detail beschrieben. In den Figuren bezeichnen gleiche bezugszeichengleiche Teile mit gleicher funktionaler Bedeutung.

In Figur 1 ist beispielhaft die Längsverstelleinheit 1 mit einer feststehenden Spindel 60' für einen (nicht dargestellten) Sitz eines Kraftfahrzeugs dargestellt. Die Spindel 60' ist an einem ersten Ende 61 und einem zweiten Ende 62 mittels jeweils eines Befestigungsbügels 4 an einem (nicht dargestellten) Chassis befestigt.

Im vorliegenden Beispiel ist der Befestigungsbügel 4 an dem zweiten Ende 62 der Spindel 60' derart ausgebildet, dass eine Rotation der Spindel 60' um eine Längsachse 5 verhindert ist.

Auf der Spindel 60' ist ein Gehäuse 10 mit einem Getriebe 2 angeordnet, welches mittels Dämpfer 90 in einem Haltebügel 80 an einer relativ zu dem Chassis bewegbaren Schiene (nicht dargestellt) befestigt ist. Eine Vierkantöffnung 43 ermöglicht einen Anschluss eines Antriebes, wodurch das Getriebe 2 motorische antreibbar ist und das Gehäuse 10 entlang der Längsachse 5 in die mit Pfeilen dargestellte Richtungen verfahrbar ist.

Figur 2 ist das Antriebskonzept der Längsverstelleinheit 1 mit einer drehenden Spindel 60 zu entnehmen. In diesem Antriebskonzept steht das Gehäuse 10 fest in einer Position - hier am ersten Ende 61 - entlang der Längsachse 5 der Spindel 60. An dem zweiten Ende 62 ist die Spindel 60 durch ein Lager 69 abgestützt. Bei einer Zustellung ist die Spindel 60 in eine Drehung um die Längsachse 5 versetzt, welches anhand von Pfeilen in Figur 2 kenntlich gemacht ist. Durch die Drehung ist ein auf der Spindel 60 angeordneter Schlitten 65 mit einer Schlittenspindelmutter 66 entlang der Längsachse 5 in der mit Pfeilen angedeuteten Richtungen bewegt. Der Schlitten bzw. die Schlittenspindelmutter 66 sind fest mit einer nicht dargestellten Ober- oder Unterschiene gekoppelt.

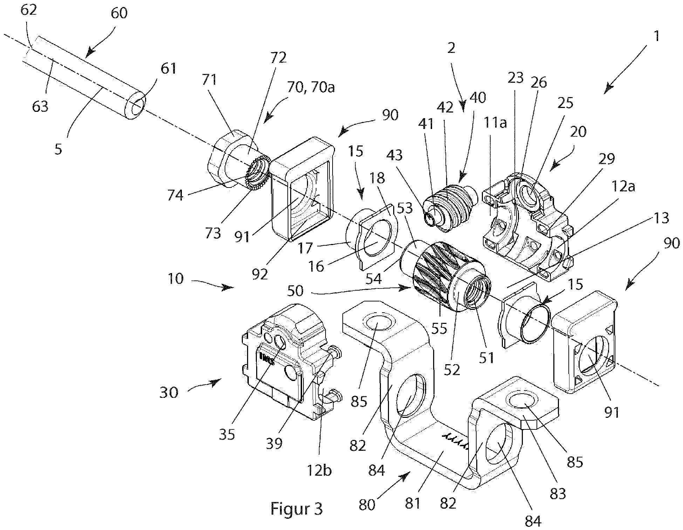

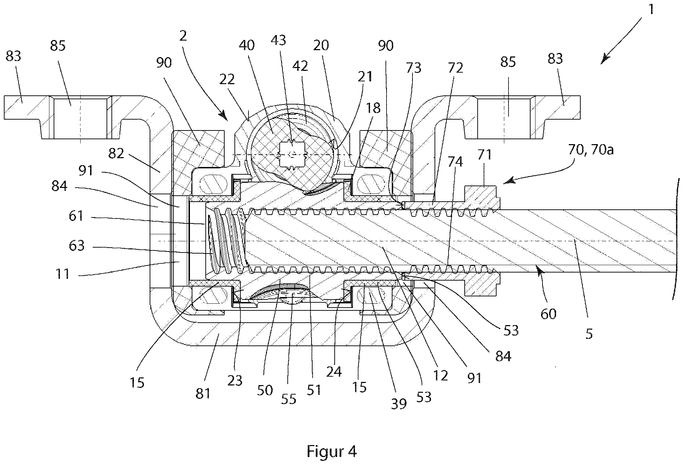

Die einzelnen Komponenten der Längsverstelleinheit 1 sind im Detail der Explosionsdarstellung in Figur 3 und der Schnittdarstellung in Figur 4 zu entnehmen.

Die Längsverstelleinheit 1 umfasst das Gehäuse 10, in dem das Getriebe 2 angeordnet ist. Das Getriebe 2 besteht aus einer Schnecke 40 und einer Spindelmutter 50, wobei die Schnecke 40 die Spindelmutter 50 antreibt. Hierzu ist die Schnecke 40 mit einem Schneckengewinde 42 versehen, das in eine Verzahnung 55 der Spindelmutter 50 kämmt.

Die Spindelmutter 50 sitzt auf einer Spindel 60, so dass eine Drehung der Schnecke 40 in eine Drehung der Spindelmutter 50 mit entsprechender Untersetzung gewandelt ist. Bei einem Antriebskonzept mit feststehender Spindel 60', wie in Figur 1 dargestellt, ist eine Drehung der Schnecke 40 in eine lineare Bewegung des Gehäuses 10 entlang der Längsachse 5 gewandelt. Bei dem Antriebskonzept mit einer feststehenden Spindel 60', dargestellt in Figur 1, folgt aus der Drehung der Spindelmutter 50 eine Verschiebung des Gehäuses 10 entlang der Längsachse 5 und die Spindel 60' durchquert das Gehäuse 10 durch die Durchgangsöffnung 13.

Zur Realisierung des Antriebskonzepts mit einer drehenden Spindel 60, dargestellt in Figur 2, ist die Drehbewegung der Spindelmutter 50 mit der Spindel 60 gekoppelt. Hierzu ist eine Spindelkontermutter 70a als Verbindungsmittel 70 vorgesehen, durch die eine drehfeste Verbindung zwischen der Spindelmutter 50 und der Spindel 60 hergestellt werden kann. Das Gehäuse 10, sowie das Getriebe 2 als auch die Dämpfer 90 und der Haltebügel 80 sind dabei für beide Antriebskonzepte baugleich. Dementsprechend können diese Bauteile/Baugruppen für beide Antriebskonzepte verwendet werden.

Das Gehäuse 10 der Längsverstelleinheit 1 ist zweiteilig ausgebildet und umfasst einen ersten Gehäuseteil 20 und einen zweiten Gehäuseteil 30. Weiterhin weist das Gehäuse 10 eine Durchgangsöffnung 13 mit einer ersten Spindelöffnung 11 und einer zweiten Spindelöffnung 12 auf. Die erste Spindelöffnung 11 und die zweite Spindelöffnung 12 sind koaxial zu der Längsachse 5 ausgerichtet und größer bemessen als die Spindel 60, so dass diese berührungsfrei durch diese entlang der Längsachse 5 durchgeführt werden kann.

Das erste Gehäuseteil 20 und das zweite Gehäuseteil 30 sind im Wesentlichen symmetrisch ausgebildet und formen die jeweilige Spindelöffnung 11, 12 zu gleichen Anteilen. Dementsprechend sind die erste Spindelöffnung 11a, 11b und die zweite Spindelöffnung 12a, 12b zweiteilig, wobei die Spindelöffnungen 11a, 11b, 12a, 12b jeweils halbkreisförmige Aussparungen in dem Gehäuseteilen 20, 30 sind. Das erste Gehäuseteil 20 und das zweite Gehäuseteil 30 sind mittels Befestigungselementen 29, 39 miteinander verbunden. Die Befestigungselemente 29, 39 können Schraubverbindungen, Klemmverbindungen, Rastverbindungen oder dergleichen sein, wobei bevorzugt die Befestigungselemente 29, 39 senkrecht zu der Längsachse 5 und benachbart zu den Spindelöffnungen 11, 12 angeordnet sind. Vorliegend sind die Befestigungselemente 29, 39 in der Trennebene zwischen dem ersten Gehäuseteil 20 und dem zweiten Gehäuseteil 30 oberhalb und unterhalb der Spindelöffnungen 11, 12 angeordnet.

Das erste Gehäuseteil 20 weist eine Innenseite 21 und eine Außenseite 22 auf und das zweite Gehäuseteil 30 eine Innenseite 31 und eine Außenseite 32. Die Innenseiten 21, 31 der beiden Gehäuseteile 20, 30 sind im Wesentlichen baugleich bzw. symmetrisch ausgestaltet.

In der Durchgangsöffnung 13 ist die Spindelmutter 50 innerhalb des Gehäuses 10 mittels Gleitlagerbuchsen 15 gelagert. Hierzu weist die Spindelmutter 50 beidseitig einen aus einem ringförmigen Flansch ausgebildeten Lagerbund 52 auf, der mittels der Gleitlagerbuchse 15 einerseits an der ersten Spindelöffnung 11 und andererseits an der zweiten Spindelöffnung 12 drehbar und jeweils axial gelagert ist. Somit ist die Spindelmutter 50 beidseitig axial in dem Gehäuse 10 gehalten.

Die Gleitlagerbuchse 15 umfasst ferner einen Flächenkörper 18 und eine Hülse 17, die eine Durchgangsöffnung 16 aufweisen. Die Hülse 17 sitzt auf dem Lagerbund 52 und lagert die Spindelmutter 50 radial und überbrückt die Trennebene zwischen dem ersten Gehäuseteil 20 und dem zweiten Gehäuseteil 30. Der Flächenkörper 18 ist eingerichtet, drehfest an einer Umrandung 23 der ersten Spindelöffnung 11 bzw. an einer Umrandung 24 der zweiten Spindelöffnung 12 anzulegen und die Spindelmutter 50 spielfrei axial zu lagern. Die Umrandungen 23, 24 nehmen somit die Axialkräfte von der Spindel 60 auf.

Die Schnecke 40 sitzt auf der Spindelmutter 50, so dass ein Schneckengewinde 42 der Schnecke 40 eine Verzahnung 55 der Spindelmutter 50 kämmt. Das Schneckengewinde 42 und die Verzahnung 55 korrespondieren entsprechend miteinander.

Die Schnecke 40 ist beabstandet und in einem Winkel von 90° zu der Spindel 60 angeordnet und einerseits mit einem Lagerbund 41 in einer kreisförmigen Öffnung 25 mit einer kreisförmigen Umrandung 26 auf der Innenseite 21 des ersten Gehäuseteils 20 und andererseits mit einem Lagerbund 41 in einer kreisförmigen Öffnung 35 mit einer kreisförmigen Umrandung 36 auf der Innenseite 31 des zweiten Gehäuseteils 30 gelagert. Darüber hinaus ist in eines der freien Enden der Schnecke 40 eine Vierkantöffnung 43 eingearbeitet oder eingeformt, durch die eine formschlüssige Kopplung mit einer Antriebseinheit bewerkstelligt werden kann.

Die Spindelmutter 50 ist wie bereits zuvor beschrieben in dem zweiteiligen Gehäuse 10 koaxial zu der Längsachse 5 in der Durchgangsöffnung 13 gelagert gehalten und weist eine Durchbohrung mit einem Spindelinnengewinde 74 auf, welches mit dem Spindelaußengewinde 63 der Spindel 60 korrespondiert.

Zur Kopplung der Spindelmutter 50 mit der Spindel 60 ist auf die Spindel 60 eine Spindelkontermutter 70a geschraubt, die im Wesentlichen einer herkömmlichen Spindelmutter mit dem Spindelinnengewinde 74 nachempfunden ist und zur einfachen Montage mittels eines Maulschlüssels einen Sechskant 71 aufweist. Die Spindelkontermutter 70a kann dabei auf der dem Schlitten 65 zugewandten Seite oder der von dem Schlitten 65 abgewandten Seite des Gehäuses 10 auf die Spindel 60 aufgeschraubt werden. Auf der der Spindelmutter 50 zugewandten Seite der Spindelkontermutter 70a ist eine Hülse 72 angeformt oder angearbeitet, die in der Längsachse 5 derart bemessen ist, dass diese durch die erste Spindelöffnung 11 oder zweite Spindelöffnung 12 bzw. durch die Durchgangsöffnung 16 der Gleitlagerbuchse 15 hindurch gegen die Spindelmutter 50 innerhalb des Gehäuses 10 verspannt werden kann. Die Durchmesser der ersten Spindelöffnung 11, der zweiten Spindelöffnung 12 und der Durchgangsöffnung 16 sind größer als der Durchmesser der Hülse 72, so dass die Spindelkontermutter 70a frei mit der Spindel 60 drehbar ist. Bei der Dimensionierung der Länge der Hülse 72 sind die Länge der Haltebügel 80 sowie die Länge der Dämpfer 90 in der Längsachse 5 zu berücksichtigen, um einen ausreichenden Abstand in der Längsachse 5 zwischen dem Sechskant 71 und den feststehenden Teilen zu gewährleisten.

Um eine bestmögliche Verbindung zwischen der Spindelmutter 50 und dem Verbindungsmittel 70 bzw. der Spindelkontermutter 70a herzustellen, weisen die Spindelkontermutter 70a und die Spindelmutter 50 auf den jeweils zugewandten Stirnseiten eine Kontaktfläche 54, 73 auf. Die Kontaktfläche 54 ist auf der der Spindelkontermutter 70a zugewandten Seite der Spindelmutter 50 angeordnet und die Kontaktfläche 73 auf der der Spindelmutter 50 zugewandten Seite der Spindelkontermutter 70a. Die Kontaktflächen 54, 73 weisen eine vergrößerte Oberflächenrauheit auf, die vorzugsweise eine Riffelung, beispielsweise nach Art einer Zahnscheibe, aufweist. Die beiden ringförmigen Flansche der Spindelmutter 50, die jeweils den Lagerbund 52 formen, sind in der Längsachse 5 unterschiedlich lang bemessen. Der ringförmige Flansch auf der der Spindelkontermutter 70a zugewandten Seite ist länger als der auf der von der Spindelkontermutter 70a abgewandten Seite und ragt in der Längsachse 5 aus der Durchgangsöffnung 16 der Gleitlagerbuchse 15 heraus. Die Spindelkontermutter 70a ist demnach asymmetrisch.

Darüber hinaus kann die Spindelkontermutter 70a mit einer Schrauben- bzw. Gewindesicherung versehen sein. Aus dem Stand der Technik sind eine Vielzahl von kraft-, form- oder stoffschlüssigen Schrauben- bzw. Gewindesicherungen bekannt, die vorliegend Anwendung finden können.

Bei der Dimensionierung der Hülse 72 der Spindelkontermutter 70a und der Spindelmutter 50 ist zu beachten, dass die ringförmigen Kontaktflächen 54, 73 ausreichend groß bemessen sind um eine drehsichere Verbindung herzustellen.

Alternativ oder ergänzend kann die Spindelmutter 50 auf der der Spindelkontermutter 70a zugewandten Seite eine hülsenförmige Verlängerung 53 aufweisen. Die hülsenförmige Verlängerung 53 der Spindelmutter 50 kann derart ausgebildet sein, dass diese aus dem Gehäuse 10, sowie durch den Dämpfer 90 und den Haltebügel 80 herausragt und somit von außen zugänglich ist, ohne dass das Gehäuse 10 geöffnet werden muss.

Das Gehäuse 10 ist beidseitig entlang der Längsachse 5 mittels Dämpfer 90 in einem Haltebügel 80 gehalten, wobei die Dämpfer 90 auf der dem Gehäuse 10 zugewandten Seite eine Aufnahmetasche 92 aufweisen, die das Gehäuse 10 bereichsweise umgreifen. Die Dämpfer 90 entkoppeln das Gehäuse 10 schwingungsmechanisch von dem Haltebügel 80. Die Dämpfer 90 sowie der Haltebügel 80 weisen jeweils Öffnungen 84, 91 auf, die auf der Längsachse 5 ausgerichtet sind und durch die die Spindel 60 durchführbar ist. Weiterhin sind die Öffnungen 84, 91 ausreichend groß bemessen, dass die Hülse 72 der Spindelkontermutter 70a oder die hülsenförmige Verlängerung 53 der Spindelmutter 50 kontaktlos durch diese geführt werden können.

Der Haltebügel 80 ist im Wesentlichen U-förmig und umfasst einen waagerechten U-Schenkel 81, zwei senkrechte U-Schenkel und zwei waagerechte Schenkel 83, die in die Befestigungsöffnungen 85 eingearbeitet sind. Der waagerechte U-Schenkel 81 und die zwei senkrechten U-Schenkel 82 umgreifen das Gehäuse 10 und die zwei Dämpfer 90 halten dieses Ensemble spalt- bzw. spielfrei zusammen.

So kann erfindungsgemäß eine Längsverstelleinheit 1 zur Verfügung gestellt werden, die sowohl für ein Antriebskonzept mit einer feststehenden Spindel 60, sowie für ein Antriebskonzept mit einer rotierenden Spindel 60 Anwendung finden kann, ohne dass eine Nachbearbeitung einzelner Bauteile notwendig ist. Die erfindungsgemäße Längsverstelleinheit 1 ist besonders einfach in der Montage, unfallsicher und kostengünstig in der Herstellung und reduziert aufgrund der Verwendungsmöglichkeiten in beiden Antriebskonzepten den logistischen Aufwand sowie Lagerkosten.

### Bezugszeichenliste

- 1: Längsverstelleinheit
- 4: Befestigungsbügel
- 5: Längsachse
- 10: Gehäuse
- 11: Erste Spindelöffnung
- 12: Zweite Spindelöffnung
- 15: Gleitlagerbuchse
- 16: Durchgangsöffnung
- 17: Mantelfläche
- 18: Anlagefläche

- 20: erstes Gehäuseteil
- 23: Umrandung von 11
- 24: Umrandung von 12
- 25: kreisförmige Öffnung für 40
- 26: kreisförmige Umrandung

- 29: Befestigungselemente
- 30: Zweites Gehäuseteil
- 33: Umrandung von 11
- 34: Umrandung von 12
- 35: Kreisförmige Öffnung für 40
- 36: Kreisförmige Umrandung
- 39: Befestigungselemente
- 40: Schnecke
- 41: Lagerbund der Schnecke
- 42: Schneckengewinde
- 43: Vierkantöffnung
- 50: Spindelmutter
- 51: Spindelinnengewinde
- 52: Lagerbund der Spindelmutter
- 53: hülsenförmige Verlängerung
- 54: Kontaktfläche von 50
- 55: Verzahnung
- 60: Spindel
- 61: Erstes Ende von 60
- 62: Zweites Ende von 60
- 63: Spindelaußengewinde
- 65: Schlitten
- 66: Schlittenspindelmutter
- 70: Spindelkontermutter
- 71: Sechskant
- 72: Hülse
- 73: Kontaktfläche
- 74: Spindelinnengewinde

- 80: U-Profil
- 81: Waagerechter U-Schenkel
- 82: Senkrechter U-Schenkel
- 83: Waagerechter Schenkel
- 84: Öffnung
- 85: Befestigungsöffnungen

- 90: Dämpfer
- 91: Durchgangsöffnung
- 92: Aufnahmetasche

## Patentansprüche

1. Längsverstelleinheit (1) eines Sitzes, insbesondere eines Sitzes in einem Kraftfahrzeug, umfassend:
- ein Gehäuse (10) mit einer Durchgangsöffnung (13), die entlang einer Längsachse (5) angeordnet ist und eine erste Spindelöffnung (11) und eine zweite Spindelöffnung (12) aufweist,
- eine Spindel (60) mit Spindelaußengewinde (63), die durch die Durchgangsöffnung (13) entlang der Längsachse (5) durch das Gehäuse (10) durchführbar ist,
- eine Spindelmutter (50) mit Spindelinnengewinde (51), und
- eine Schnecke (40), die die Spindelmutter (50) antreibt und in dem Gehäuse (10) durch einen beidseitigen Lagerbund (41) gelagert ist,
- wobei die Spindelmutter (50) in dem Gehäuse (10) in der Längsachse (5) beidseitig drehbar und axial gelagert ist,
- wobei mindestens ein Verbindungsmittel (70) vorgesehen ist, durch welches die Spindel (60) mit der Spindelmutter (50) drehfest verbunden ist, und
- wobei das mindestens eine Verbindungsmittel (70) eine Spindelkontermutter (70a) ist, die nach Art einer Konterschraube mit der Spindelmutter verspannt werden kann.

2. Längsverstelleinheit (1) nach Anspruch 1, **dadurch gekennzeichnet, dass** die Spindelkontermutter (70a) eine Hülse (72) aufweist, die durch die erste Spindelöffnung (11) und/oder die zweite Spindelöffnung (12) in das Gehäuse (10) einführbar ist.

3. Längsverstelleinheit (1) nach Anspruch 1 oder 2, **dadurch gekennzeichnet, dass** die Spindelkontermutter (70a) auf einer der Spindelmutter (50) zugewandten Seite eine Kontaktfläche (73) mit vergrößerter Oberflächenrauheit aufweist, vorzugsweise eine Riffelung.

4. Längsverstelleinheit (1) nach einem vorgenannten Ansprüche, **dadurch gekennzeichnet, dass** zwischen der Spindelmutter (50) und dem Gehäuse (10) eine Gleitlagerbuchse (15) angeordnet ist.

5. Längsverstelleinheit (1) nach einem der vorgenannten Ansprüche, **dadurch gekennzeichnet, dass** die Spindelmutter (50) mindestens eine hülsenförmige Verlängerung (53) aufweist, die durch eine der Spindelöffnungen (11, 12) aus dem Gehäuse (10) herausragt.

6. Längsverstelleinheit (1) nach einem der vorgenannten Ansprüche, **dadurch gekennzeichnet, dass** die Spindelmutter (50) auf wenigstens einer der Stirnseiten eine Kontaktfläche (54) mit einer vergrößerten Oberflächenrauheit aufweist.

7. Längsverstelleinheit (1) nach einem der vorgenannten Ansprüche, **dadurch gekennzeichnet, dass** die Spindelkontermutter (70a) einen Außensechskant (71) aufweist.

8. Längsverstelleinheit (1) nach einem der vorgenannten Ansprüche, **dadurch gekennzeichnet, dass** die Spindel (60) an einem zweiten Ende (62) ein Lager (69) aufweist.

9. Längsverstelleinheit (1) nach einem der vorgenannten Ansprüche, **dadurch gekennzeichnet, dass** die Schnecke (40) mit einem Antriebsmotor koppelbar ist und dass der Antriebsmotor mittels der Schnecke (40) und der Gewindemutter (50) die Spindel (60) in eine Drehung um die Längsachse (5) versetzen kann.

10. Längsverstelleinheit (1) nach einem der vorgenannten Ansprüche, **dadurch gekennzeichnet, dass** das Gehäuse (10) aus einem ersten Gehäuseteil (20) und einem zweiten Gehäuseteil (30) gebildet ist.

11. Längsverstelleinheit (1) nach einem der vorgenannten Ansprüche, **dadurch gekennzeichnet, dass** das erste Gehäuseteil (20) und das zweite Gehäuseteil (30) zu gleichen Anteilen jeweils die erste Spindelöffnung (11) und die zweite Spindelöffnung (12) bilden.

12. Längsverstelleinheit (1) nach einem der vorgenannten Ansprüche, **dadurch gekennzeichnet, dass** das Gehäuse (10) mit den beiden Gehäusenteilen (20, 30) in einem U-förmigen Haltebügel (80) gehalten ist.

13. (1) nach Anspruch 12, **dadurch gekennzeichnet, dass** zwischen dem Gehäuse (10) und dem U-förmigen Haltebügel (80) mindestens ein Dämpfer (90) angeordnet ist.

14. Längsverstelleinheit (1) nach einem der vorgenannten Ansprüche, **dadurch gekennzeichnet, dass** das Gehäuse (10) aus einem Metallwerkstoff hergestellt ist.

15. Längsverstelleinheit (1) nach einem der vorgenannten Ansprüche, **dadurch gekennzeichnet, dass** das erste Gehäuseteil (20) und das zweite Gehäuseteil (30) durch eine Klemm-, Schnapp-, Klebe, Schweiß- und/oder Schraubverbindung miteinander verbunden sind.

## Claims

1. Lengthwise adjustment unit (1) of a seat, in particular, of a seat in a motor vehicle, comprising:
- a housing (10) with a through opening (13) that is disposed along a longitudinal axis (5) and which comprises a first spindle opening (11) and a second spindle opening (12),
- a spindle (60) with a spindle outer thread (63) that can be inserted through the through opening (13) along the longitudinal axis (5) through the housing (10),
- a spindle nut (50) with a spindle inner thread (51), and
- a screw (40) that drives the spindle nut (50) and that is mounted in the housing (10) by means of a two-sided bearing flange (41),
- wherein the spindle nut (50) in the housing (10) is rotatable in both directions and is axially mounted,
- wherein at least one connection means (70) is provided, by means of which the spindle (60) is non-rotatably connected to the spindle nut (50), and
- wherein the at least one connection means (70) is a spindle locknut (70a) that can be tightened with the spindle nut in the manner of a counter nut.

2. Lengthwise adjustment unit (1) in accordance with claim 1,
**characterized in that** the spindle locknut (70a) comprises a sleeve (72) that can be inserted into the housing (10) through the first spindle opening (11) and/or the second spindle opening (12).

3. Lengthwise adjustment unit (1) in accordance with claim 1 or 2,
**characterized in that** the spindle locknut (70a) comprises, on a side facing the spindle nut (50), a contact surface (73) with an increased surface roughness, preferably with a corrugation.

4. Lengthwise adjustment unit (1) in accordance with any of the preceding claims, **characterized in that** a plain bearing bush (15) is disposed between the spindle nut (50) and the housing (10).

5. Lengthwise adjustment unit (1) in accordance with any of the preceding claims, **characterized in that** the spindle nut (50) comprises at least one sleeve-shaped elongation (53) that extends out of the housing (10) through one of the spindle openings (11, 12).

6. Lengthwise adjustment unit (1) in accordance with any of the preceding claims, **characterized in that** the spindle nut (50) has a contact surface (54) on at least one of its end faces that has an increased surface roughness.

7. Lengthwise adjustment unit (1) in accordance with any of the preceding claims, **characterized in that** the spindle locknut (70a) comprises an outer hexagon (71).

8. Lengthwise adjustment unit (1) in accordance with any of the preceding claims, **characterized in that** the spindle (60) comprises a bearing (69) on a second end (62).

9. Lengthwise adjustment unit (1) in accordance with any of the preceding claims, **characterized in that** the screw (40) can be coupled to a drive motor and **in that** the drive motor can set the spindle (60) in rotation around the longitudinal axis (5) by means of the screw (40) and the threaded nut (50).

10. Lengthwise adjustment unit (1) in accordance with any of the preceding claims, **characterized in that** the housing (10) is formed of a first housing part (20) and of a second housing part (30).

11. Lengthwise adjustment unit (1) in accordance with any of the preceding claims, **characterized in that** the first housing part (20) and the second housing part (30) form, respectively and in equal proportions, the first spindle opening (11) and the second spindle opening (12).

12. Lengthwise adjustment unit (1) in accordance with any of the preceding claims, **characterized in that** the housing (10) with the two housing parts (20, 30) is held in a U-shaped mounting bracket (80).

13. Lengthwise adjustment unit (1) in accordance with claim 12,
**characterized in that** at least one damper (90) is disposed between the housing (10) and the U-shaped mounting bracket (80).

14. Lengthwise adjustment unit (1) in accordance with any of the preceding claims, **characterized in that** the housing (10) is made of a metallic material.

15. Lengthwise adjustment unit (1) in accordance with any of the preceding claims, **characterized in that** the first housing part (20) and the second housing part (30) are connected to each other by means of a clamped, adhesive, welded and/or screwed connection.

## Revendications

1. Unité de réglage longitudinal (1) d'un siège notamment d'un siège de véhicule automobile comprenant :
- un boîtier (10) muni d'un orifice traversant (13) le long d'un axe longitudinal (5) et ayant un premier orifice de broche (11) et un second orifice de broche (12),
- une broche (60) munie d'un filetage extérieur (63) passant à travers le boîtier (10) par l'orifice traversant (13) selon l'axe longitudinal (5),
- un écrou de broche (50) muni d'un filetage intérieur (51), et
- une vis (40) entraînant l'écrou de broche (50) et montée dans le boîtier (10) par une collerette de palier (41) à ses deux extrémités,
- l'écrou de broche (50) étant monté axialement à rotation des deux côtés dans le boîtier (10) selon l'axe longitudinal (5),
- au moins un moyen de liaison (70) pour relier solidairement en rotation la broche (60) à l'écrou de broche (50), et
- ce moyen de liaison (70) est un contre-écrou de broche (70a) se serrant à l'écrou de broche à la manière d'un contre-écrou.

2. Unité de réglage longitudinal (1) selon la revendication 1,
**caractérisée en ce que**
le contre-écrou (70a) comporte une douille (72) introduite dans le boîtier (10) à travers le premier orifice de broche (11) et/ou le second orifice de broche (12).

3. Unité de réglage longitudinal (1) selon la revendication 1 ou 2,
**caractérisée en ce qu'**
à l'opposé du côté de l'écrou de broche (50) le contre-écrou de broche (70a) présente une surface de contact (73) ayant une rugosité de surface augmentée, de préférence un moletage.

4. Unité de réglage longitudinal (1) selon l'une des revendications précédentes,
**caractérisée en ce qu'**
une douille de palier lisse (15) est entre l'écrou de broche (50) et le boîtier (10).

5. Unité de réglage longitudinal (1) selon l'une des revendications précédentes,
**caractérisée en ce que**
l'écrou de broche (50) comporte au moins un prolongement (53) en forme de manchon qui dépasse du boîtier (10) à travers l'un des orifices de broche (11, 12).

6. Unité de réglage longitudinal (1) selon l'une des revendications précédentes,
**caractérisée en ce que**
l'écrou de broche (50) présente une surface de contact (54) avec une rugosité de surface augmentée sur au moins l'un des côtés frontaux.

7. Unité de réglage longitudinal (1) selon l'une des revendications précédentes,
**caractérisée en ce que**
le contre-écrou de broche (70a) comporte un six pans extérieur (71).

8. Unité de réglage longitudinal (1) selon l'une des revendications précédentes,
**caractérisée en ce que**
la broche (60) comporte un palier (69) face à sa seconde extrémité (62).

9. Unité de réglage longitudinal (1) selon l'une des revendications précédentes,
**caractérisée en ce que**
la vis (40) est couplée à un moteur d'entraînement en rotation la broche (60) autour de l'axe longitudinal (5) par la vis (40) et l'écrou fileté (50).

10. Unité de réglage longitudinal (1) selon l'une des revendications précédentes,
**caractérisée en ce que**
le boîtier (10) se compose d'une première partie de boîtier (20) et d'une seconde partie de boîtier (30).

11. Unité de réglage longitudinal (1) selon l'une des revendications précédentes,
**caractérisée en ce que**
la première partie de boîtier (20) et la seconde partie de boîtier (30) forment à parties égales, chaque fois le premier orifice de broche (11) et le second orifice de broche (12).

12. Unité de réglage longitudinal (1) selon l'une des revendications précédentes,
**caractérisée en ce que**
le boîtier (10) est tenu dans l'étrier de maintien (80) en forme de U par les deux parties de boîtier (20, 30).

13. Unité de réglage longitudinal (1) selon la revendication 12,
**caractérisée en ce qu'**
au moins un amortisseur (90) est prévu entre le boîtier (10) et l'étrier de maintien (80) en forme de U.

14. Unité de réglage longitudinal (1) selon l'une des revendications précédentes,
**caractérisée en ce que**
le boîtier (10) est réalisé en un matériau métallique.

15. Unité de réglage longitudinal (1) selon l'une des revendications précédentes,
**caractérisée en ce que**
la première partie de boîtier (20) et la seconde partie de boîtier (30) sont reliées l'une à l'autre par une liaison par serrage, pincement, collage, soudage et/ou vissage.
